# EUROPEAN PATENT SPECIFICATION

(11) **EP 1 507 421 B1**
(45) Date of publication and mention of the grant of the patent: **28.06.2006**
(21) Application number: 03018469.1
(22) Date of filing: 14.08.2003
(51) Int. Cl.: H04Q 7/30

(54) **Base station synchronization during soft handover**
Synchronisation von Basisstationen während Soft-Handover
Synchronization de station de base lors d'un transfert souple

(43) Date of publication of application: 16.02.2005
(73) Proprietor: MATSUSHITA ELECTRIC INDUSTRIAL CO., LTD., Kadoma City, Osaka Pref., 571-8501 (JP)
(72) Inventor: Löhr, Joachim c/o Panasonic R&D Center German GmbH, 63225 Langen (DE); Seidel, Eiko, 64285 Darmstadt (DE); Petrovic, Dragan, 64295 Darmstadt (DE)
(74) Representative: Grünecker, Kinkeldey, Stockmair & Schwanhäusser Anwaltssozietät

(56) References cited:
- EP-A- 1 037 491
- WO-A-02/37872
- GB-A- 2 369 961
- US-A1- 2003 031 119

## Description

The present invention relates to a data transmission method and data packet retransmission method for use in a mobile communication system comprising a communication terminal and a plurality of base stations, wherein the communication terminal is in communication with the plurality of base stations during a soft handover. Further, the present invention relates to a base station executing the data transmission method and the data retransmission method.

### TECHNICAL BACKGROUND

W-CDMA (Wideband Code Division Multiple Access) is a radio interface for IMT-2000 (International Mobile Communication), which was standardized for use as the 3^{rd} generation wireless mobile telecommunication system. It provides a variety of services such as voice services and multimedia mobile communication services in a flexible and efficient way. The standardization bodies in Japan, Europe, USA, and other countries have jointly organized a project called the 3^{rd} Generation Partnership Project (3GPP) to produce common radio interface specifications for W-CDMA.

The standardized European version of IMT-2000 is commonly called UMTS (Universal Mobile Telecommunication System). The first release of the specification of UMTS has been published in 1999 (Release 99). In the mean time several improvements to the standard have been standardized by the 3GPP in Release 4 and Release 5 and discussion on further improvements is ongoing under the scope of Release 6.

The dedicated channel (DCH) for downlink and uplink and the downlink shared channel (DSCH) have been defined in Release 99 and Release 4.. In the following years, the developers recognized that for providing multimedia services - or data services in general - high speed asymmetric access had to be implemented. In Release 5 the high-speed downlink packet access (HSDPA) was introduced. The new high-speed downlink shared channel (HS-DSCH) provides downlink high-speed access to the user from the UMTS Radio Access Network (RAN) to the communication terminals, called user equipments in the UMTS specifications.

HSDPA is based on techniques such as fast packet scheduling, adaptive modulation and hybrid ARQ (HARQ) to achieve high throughput, reduce delay and achieve high peak data rates.

### HYBRID ARQ SCHEMES

The most common technique for error detection of non-real time services is based on Automatic Repeat reQuest (ARQ) schemes, which are combined with Forward Error Correction (FEC), called Hybrid ARQ. If Cyclic Redundancy Check (CRC) detects an error, the receiver requests the transmitter to send additional bits or a new data packet. From different existing schemes the stop-and-wait (SAW) and selective-repeat (SR) continuous ARQ are most often used in mobile communication.

A data unit will be encoded before transmission. Depending on the bits that are retransmitted three different types of ARQ may be defined.

In HARQ Type I the erroneous data packets received, also called PDUs (Packet Data Unit) are discarded and new copy of that PDU is retransmitted and decoded separately. There is no combining of earlier and later versions of that PDU. Using HARQ Type II the erroneous PDU that needs to be retransmitted is not discarded, but is combined with some incremental redundancy bits provided by the transmitter for subsequent decoding. Retransmitted PDU sometimes have higher coding rates and are combined at the receiver with the stored values. That means that only little redundancy is added in each retransmission.

Finally, HARQ Type III is almost the same packet retransmission scheme as Type II and only differs in that every retransmitted PDU is self-decodable. This implies that the PDU is decodable without the combination with previous PDUs. In case some PDUs are so heavily damaged that almost no information is reusable self decodable packets can be advantageously used.

### UMTS ARCHITECTURE

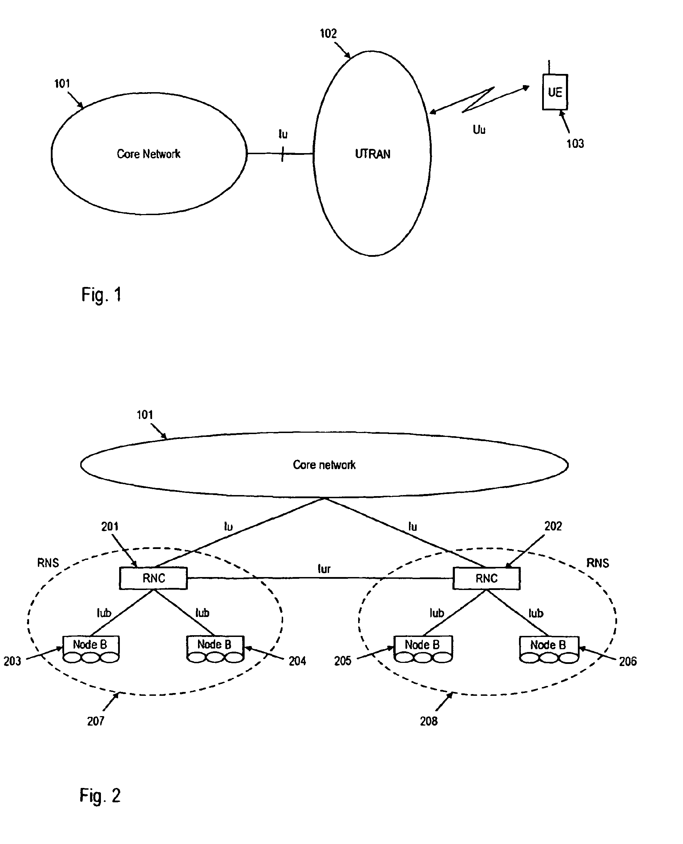

The high level R99/4/5 architecture of Universal Mobile Telecommunication System (UMTS) is shown in Fig. 1 (see 3GPP TR 25.401: "UTRAN Overall Description", available from http://www.3gpp.org). The network elements are functionally grouped into the Core Network (CN) 101, the UMTS Terrestrial Radio Access Network (UTRAN) 102 and the User Equipment (UE) 103. The UTRAN 102 is responsible for handling all radio-related functionality, while the CN 101 is responsible for routing calls and data connections to external networks. The interconnections of these network elements are defined by open interfaces (lu, Uu). It should be noted that UMTS system is modular and it is therefore possible to have several network elements of the same type.

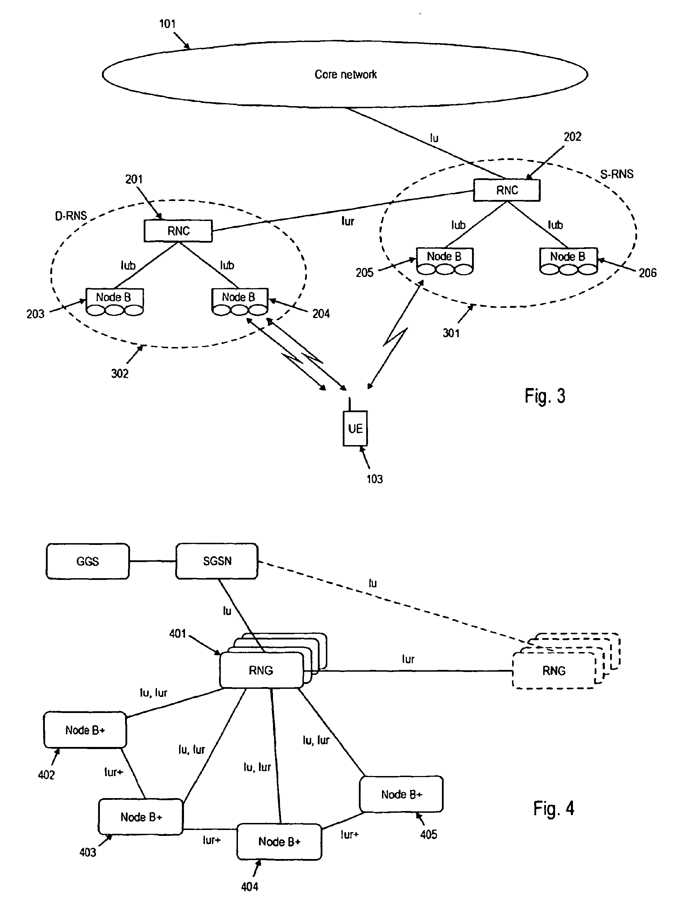

Fig. 2 illustrates the current architecture of UTRAN. A number of Radio Network Controllers (RNCs) 201, 202 are connected to the CN 101. Each RNC 201, 202 controls one or several base stations (Node Bs) 203, 204, 205, 206, which in turn communicate with the UEs. An RNC controlling several base stations is called Controlling RNC (C-RNC) for these base stations. A set of controlled base stations accompanied by their C-RNC is referred to as Radio Network Subsystem (RNS) 207, 208. For each connection between User Equipment and the UTRAN, one RNS is the Serving RNS (S-RNS). It maintains the so-called lu connection with the Core Network (CN) 101. When required, the Drift RNS 302 (D-RNS) 302 supports the Serving RNS (S-RNS) 301 by providing radio resources as shown in Fig. 3. Respective RNCs are called Serving RNC (S-RNC) and Drift RNC (D-RNC). It is also possible and often the case that C-RNC and D-RNC are identical and therefore abbreviations S-RNC or RNC are used.

### EVOLVED UTRAN ARCHITECTURE

Currently, the feasibility study for UTRAN Architecture Evolution from the current R99/4/5 UMTS architecture is ongoing (see 3GGP TSG RAN WG3: "Feasibility Study on the Evolution of the UTRAN Architecture", available at http://www.3gpp.org). Two general proposals for the evolved architecture (see 3GGP TSG RAN WG3, meeting #36, "Proposed Architecture on UTRAN Evolution", Tdoc R3-030678 and "Further Clarifications on the Presented Evolved Architecture", Tdoc R3-030688, available at http://www.3gpp.org) have emerged. The proposal entitled "Further Clarifications on the Presented Evolved Architecture" will be discussed in the following in reference to Fig. 4.

The RNG (Radio Network Gateway) 401 is used for interworking with the conventional RAN, and to act as a mobility anchor point meaning that once an RNG 401 has been selected for the connection, it is retained for the duration of the call. This includes functions both in control plane and user plane.

On the control plane the RNG 401 acts as a signaling gateway between the evolved RAN and the CN, and the evolved RAN and R99/4/5 UTRAN. It has the following main functions:
- lu signaling gateway, i.e. anchor point for the RANAP (Radio Access Network Application Part) connection,
   - RANAP connection termination, including:
      - Setup and release of the signaling connections
      - Discrimination of connectionless messages
      - Processing of RANAP connectionless messages,
   - Relay of idle and connected mode paging message to the relevant NodeB+(s),
- The RNG takes the CN role in inter NodeB+ relocations,
- User plane control and
- tursignahng gateway between NodeB+ 402-405 and R99/4/5 RNC.

Further, the RNG is the user plane access point from the CN or conventional RAN to the evolved RAN. It has the following user plane functions:
- User plane traffic switching during relocation,
- Relaying GTP (GPRS tunneling protocol on the lu interface) packets between NodeB+ and SGSN (Serving GPRS Support Node, an element of the CN) and
- lur interworking for user plane.

The NodeB+ 402-405 element terminates all the RAN radio protocols (Layer 1 - Physical Layer, Layer 2 - Medium Access Control and Radio Link Control sub-layers, and Layer 3 - Radio Resource Control). NodeB+ 402-405 control plane functions include all the functions related to the control of the connected mode terminals within the evolved RAN. Main functions are:
- Control of the UE,
- RANAP connection termination,
   - Processing of RANAP connection oriented protocol messages
- Control / termination of the RRC (Radio Resource Control) connection and
- Control of the initialization of the relevant user plane connections.

The UE context is removed from the (serving) NodeB+ when the RRC connection is terminated, or when the functionality is relocated to another NodeB+ (serving NodeB+ relocation). Control plane functions include also all the functions for the control and configuration of the resources of the cells of the NodeB+ 402-405, and the allocation of the dedicated resources upon request from the control plane part of the serving NodeB+. The "+" in the term "NodeB+" expresses the enhanced functionality of the base station in comparison to the R99/4/5 specifications.

User plane functions of the NodeB+ 402-405 include the protocol functions of PDCP (Packet Data Convergence Protocol), RLC (Radio Link Control) and MAC (Media Access Control) and Macro Diversity Combining.

### ENHANCED UPLINK DEDICATED CHANNEL (E-DCH)

Uplink enhancements for Dedicated Transport Channels (DTCH) are currently studied by the 3GPP Technical Specification Group RAN (see 3GPP TR 25.896: "Feasibility Study for Enhanced Uplink for UTRA FDD (Release 6)", available at http://www.3gpp.org). Since the use of IP-based services become more important, there is an increasing demand to improve the coverage and throughput of the RAN as well as to reduce the delay of the uplink dedicated transport channels. Streaming, interactive and background services could benefit from this enhanced uplink.

One enhancement is the usage of adaptive modulation and coding schemes (AMC) in connection with Node B controlled scheduling, thus an enhancement of the Uu interface. In the existing R99/R4/R5 system the uplink maximum data rate control resides in the RNC. By relocating the scheduler in the Node B the latency introduced due to signaling on the interface between RNC and Node B can be reduced and thus the scheduler is able to respond faster to temporal changes in the uplink load. This will reduce the overall latency in communications of the UE with the RAN. Therefore Node B controlled scheduling is capable of better controlling the uplink interference and smoothing the noise rise variance by allocating higher data rates quickly when the uplink load decreases and respectively by restricting the uplink data rates when the uplink load increases. The coverage and cell throughput may be improved by a better control of the uplink interference.

Another technique, which may be considered to reduce the delay on the uplink, is introducing a shorter TTI (Transmission Time Interval) length for the E-DCH compared to other transport channels. A TTI length of 2ms is currently investigated for use on the E-DCH, while a TTI of 10ms is commonly used on the other channels. Hybrid ARQ, which was one of the key technologies in HSDPA, is also considered for the enhanced uplink dedicated channel. The hybrid ARQ protocol between Node B and UE allows for rapid retransmissions of erroneously received data units, thus reducing the number of RLC (Radio Link Control) retransmissions and the associated delays. This can improve the quality of service experienced by the end user.

To support enhancements described above, a new MAC sub-layer is introduced which will be called MAC-eu in the following (see 3GPP TSG RAN WG1, meeting #31, Tdoc R01-030284, " Scheduled and Autonomous Mode Operation for the Enhanced Uplink"). The entities of this new sub-layer, which will be described in more detail in the following sections, may be located in UE and Node B. On UE side, the MAC-eu performs the new task of multiplexing upper layer data (e.g. MAC-d) data into the new enhanced transport channels and operating HARQ protocol transmitting entities.

### E-DCH MAC ARCHITECTURE AT THE UE

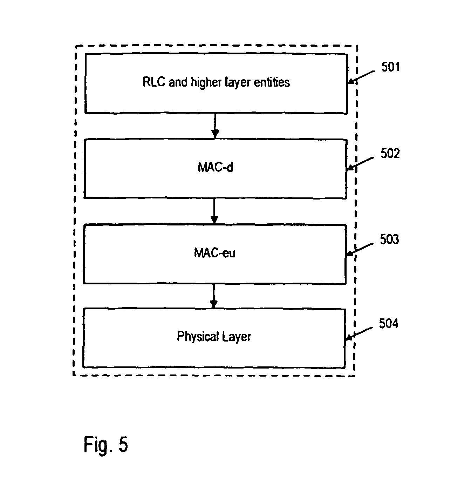

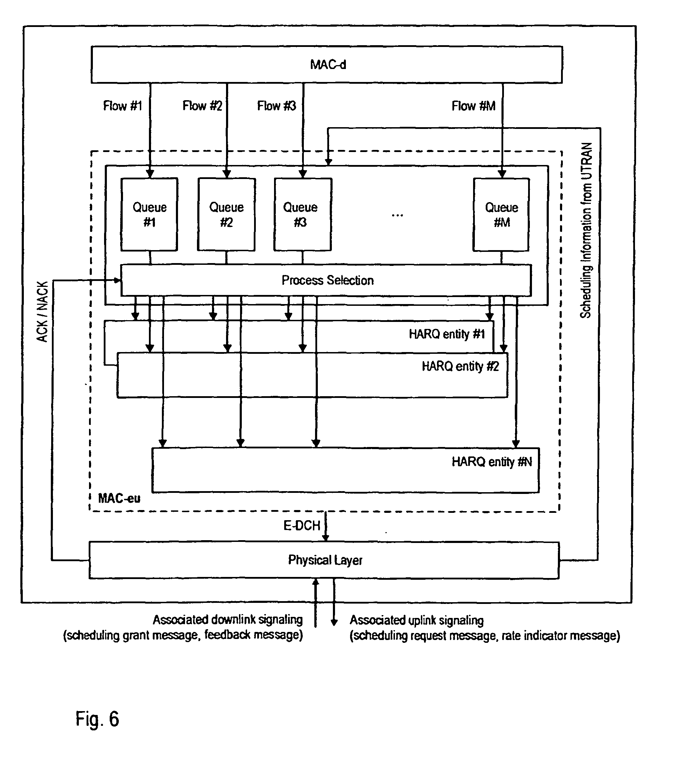

Fig. 5 shows the exemplary overall E-DCH MAC architecture on UE side. A new MAC functional entity, the MAC-eu 503, is added to the MAC architecture of Rel/99/4/5. The MAC-eu 503 entity is depicted in more detail in Fig. 6.

There are M different data flows (MAC-d) carrying data packets to be transmitted from UE to Node B. These data flows can have different QoS (Quality of Service), e.g. delay and error requirements, and may require different configurations of HARQ instances. Therefore the data packets can be stored in different Priority Queues. The set of HARQ transmitting and receiving entities, located in UE and Node B respectively will be referred to as HARQ process. The scheduler will consider QoS parameters in allocating HARQ processes to different priority queues. MAC-eu entity receives scheduling information from Node B (network side) via Layer 1 signaling.

### E-DCH MAC ARCHITECTURE AT THE UTRAN

In soft handover operation the MAC-eu entities in the E-DCH MAC Architecture at the UTRAN side may be distributed across Node B (MAC-eub) and S-RNC (MAC-eur). The scheduler in Node B chooses the active users and performs rate control by determining and signaling a commanded rate, suggested rate or TFC (Transport Format Combination) threshold that limits the active user (UE) to a subset of the TCFS (Transport Format Combination Set) allowed for transmission.

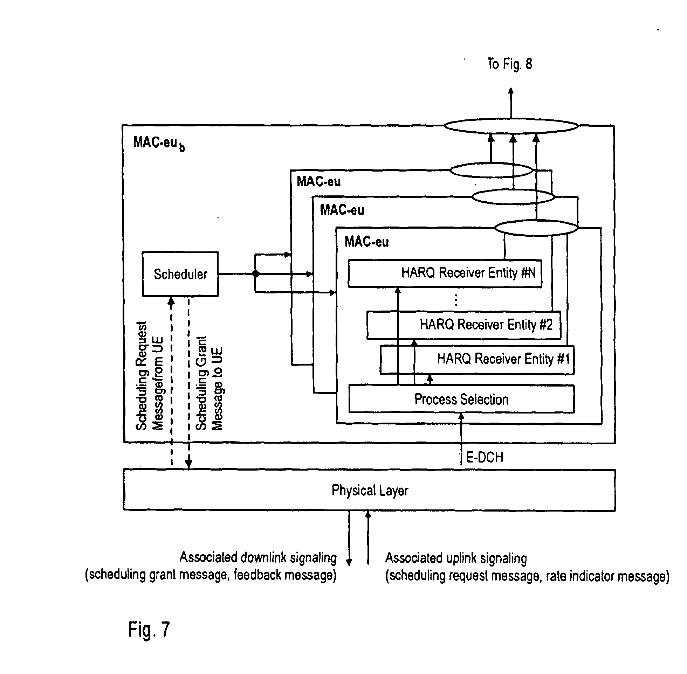

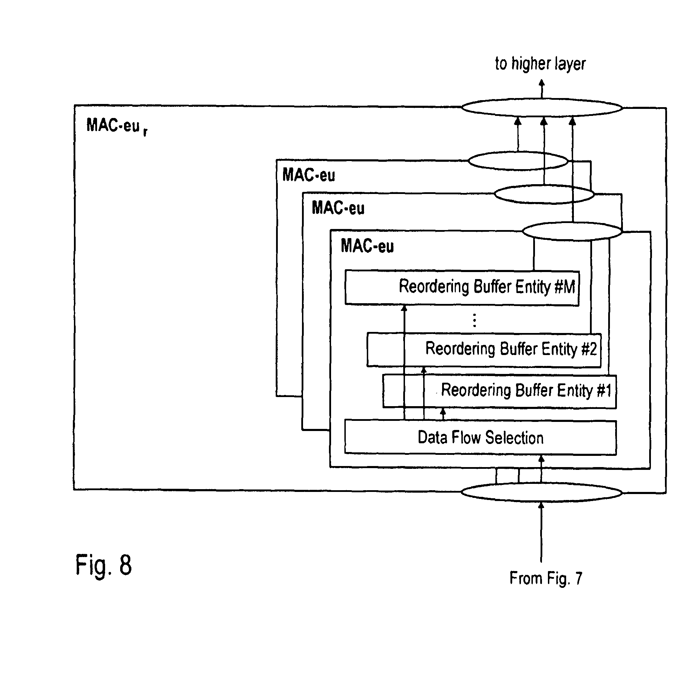

Every MAC-eu entity corresponds to a user (UE). In Fig. 7 the Node B MAC-eu architecture is depicted in more detail. It can be noted that each HARQ Receiver entity is assigned certain amount or area of the soft buffer memory for combining the bits of the packets from outstanding retransmissions. Once a packet is received successfully, it is forwarded to the reordering buffer providing the in-sequence delivery to upper layer. According to the depicted implementation, the reordering buffer resides in S-RNC during soft handover (see 3GPP TSG RAN WG 1, meeting #31: "HARQ Structure", Tdoc R1-030247, available of http://www.3gpp.org). Fig. 8 the S-RNC MAC-eu architecture which comprises the reordering buffer of the corresponding user (UE) is shown. The number of reordering buffers is equal to the number of data flows in the corresponding MAC-eu entity on UE side. Data and control information is sent from all Node Bs within Active Set to S-RNC during soft handover.

It should be noted that the required soft buffer size depends on the used HARQ scheme, e.g. an HARQ scheme using incremental redundancy (IR) requires more soft buffer than one with chase combining (CC).

### E-DCH SIGNALING

E-DCH associated control signaling required for the operation of a particular scheme consists of uplink and downlink signaling. The signaling depends on uplink enhancements being considered.

In order to enable Node B controlled scheduling (e.g. Node B controlled time and rate scheduling), UE has to send some request message on the uplink for transmitting data to the Node B. The request message may contain status information of a UE e.g. buffer status, power status, channel quality estimate. Based on this information Node B can estimate the noise rise and schedule the UE. With a grant message sent in the downlink from Node B to the UE, Node B assigns the UE the TFCS with maximum data rate and the time intervals, the UE is allowed to send.

In the uplink UE has to signal Node B with a rate indicator message information that is necessary to decode the transmitted packets correctly, e.g. transport block size (TBS), modulation and coding scheme (MCS) level, etc. Furthermore, in case HARQ is used, the UE has to signal HARQ related control information (e.g. Hybrid ARQ process number, HARQ sequence number referred to as New Data Indicator (NDI) for UMTS Rel.5 , Redundancy version (RV), Rate matching parameters etc.)

After reception and decoding of transmitted packets on enhanced uplink dedicated channel (E-DCH) the Node B has to inform the UE if transmission was successful by respectively sending ACK/NAK in the downlink.

### MOBILITY MANAGEMENT WITHIN R99/4/5 UTRAN

In this section some frequently used terms will be briefly defined and some procedures connected to mobility management will be outlined (see 3GPP TR 21.905: "Vocabulary for 3GPP Specifications" available at http://www.3gpp.org).

A radio link may be a logical association between single UE and a single UTRAN access point. Its physical realization comprises radio bearer transmissions.

A handover may be defined as transfer a user's connection from one radio bearer to another. In a "hard handover" of a new radio link is established. In contrast, during "soft handover" (SHO) radio links are established and abandoned such that the UE always keeps at least one radio link to the UTRAN. Soft handover is specific for networks employing Code Division Multiple Access (CDMA) technology. Handover execution is commonly controlled by S-RNC in mobile radio network.

The "active set" comprises a set of radio links simultaneously involved in a specific communication service between UE and radio network, e.g. during soft handover, the UE's active set comprises all radio links to the RAN's Node Bs serving the UE.

Active set update procedures may be used to modify the active set of the communication between UE and UTRAN. The procedure may comprise three functions: radio link addition, radio link removal and combined radio link addition and removal. The maximum number of simultaneous radio links is commonly set to four. New radio links may be added to the active set once the pilot signal strengths of respective base stations exceed certain threshold relative to the pilot signal of the strongest member within active set. A radio link may be removed from the active set once the pilot signal strength of the respective base station exceeds certain threshold relative to the strongest member of the active set.

The threshold for radio link addition may be typically chosen to be higher than that for the radio link deletion. Hence, addition and removal events form a hysteresis with respect to pilot signal strengths.

Pilot signal measurements are reported to the network (S-RNC) from UE by means of RRC signaling. Before sending measurement results, some filtering is usually performed to average out the fast fading. Typical filtering duration is about 200 ms and it contributes to handover delay (see 3GPP TS 25.133: "Requirements for Support of Radio Resource Management (FDD)", available at http://www. 3gpp.org). Based on measurement results, S-RNC may decide to trigger the execution of one of the functions of active set update procedure (addition / removal of a Node B to / from current Active Set).

### E-DCH - OPERATION DURING SOFT HANDOVER

Supporting soft handover is desirable to obtain the macro diversity gain. In HSDPA for example no soft handover is supported for the HS-DSCH (High Speed Downlink Shared Channel) transport channel. Applying soft handover causes the problem of distributing scheduling responsibilities across all Node Bs of the active set and would require extremely tight timing to provide the scheduling decision to all members of the active set even if distribution of scheduling function were resolved. Only one Node B is transmitting on HS-DSCH to a UE and thus no macro diversity gain is exploited. When UE enters soft handover region for dedicated channels, the Node B, which is allowed to transmit on HS-DSCH, has to be determined. The selection of serving Node B may be done from either the UE side or from network side (by RNC).

In the Fast Cell Selection (FCS) method for HS-DSCH, the UE selects the cell that is the most suitable for transmitting data. UE periodically monitors the channel conditions in the cells within the active set to check whether there is a cell with better channel conditions than the current serving cell.

In case soft handover is not supported for the uplink, a serving Node B has to be selected. One problem, which might occur, is inaccurate selection of the serving Node B. Thus there may be a cell within active set more suitable for uplink transmission than the chosen uplink serving Node B. Therefore, data transmission to a cell controlled by current serving Node B could fail, whereas the transmission to the cells controlled by other Node Bs would have been successful. The accuracy of the selection depends on several factors like signaling delay, filtering of measurement results etc.

To conclude, supporting SHO operation for E-DCH is useful because of macro diversity gain and because possible transmission failures due to an inaccurate selection of the best uplink serving Node B can be eliminated.

### SOFT HANDOVER OPERATION WITHOUT SOFT BUFFER SYNCHRONIZATION

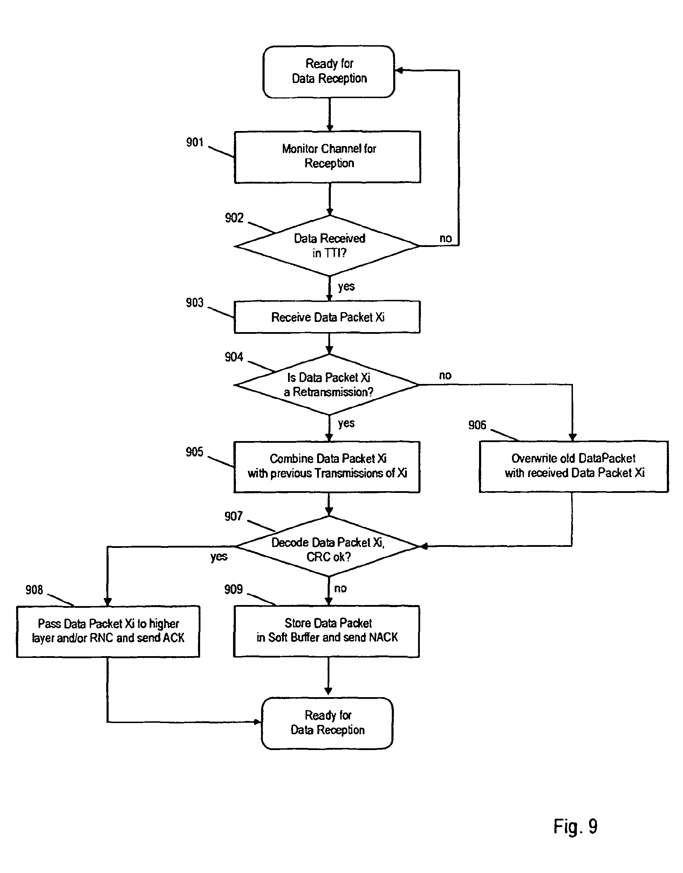

A flow chart for Node B soft handover operation without soft buffer synchronization assuming R99/R4/R5 architecture is given in Fig. 9. The figure depicts the operation of an arbitrary Node B from the Active Set.

Each Node B within active set monitors the enhanced dedicated physical data channel (E-DPDCH) in step 901 for the reception of uplink traffic. In case a packet is received in step 903 within a transmission time interval (TTI) (see step 902), Node B has to decide if the packet was the initial transmission or a retransmission of a previously sent data packet. The decision is based on associated uplink control signaling, e.g. the New Data Indicator (NDI). In case the received packet was a retransmission then Node B has to combine the received data packet with the previous transmissions stored in the soft buffer before decoding in step 905. For an initial transmission Node B stores (see step 906) the received packet in the corresponding soft buffer (possible previous transmissions stored in that soft buffer are overwritten) and can immediately try to decode the packet upon reception.

The testing whether decoding was successful or not (see step 907) is done by evaluating the CRC checksum. If the packet is correctly decoded, Node B passes it to higher layer and sends it to S-RNC via lub/lur interface in step 908. In case decoding was not successful the soft information is stored in the soft buffer in step 909.

As outlined above, soft handover operation provides an additional macro diversity gain but also complicates system design to a certain extent. Taking the E-DCH as an example, there is a single transmitting protocol entity and multiple receiving protocol entities for soft handover operation, while for non-soft handover operation there are only a single transmitting and a single receiving protocol entity.

### HARQ OPERATION IN NON-SOFT HANDOVER

During non-SHO operation, a simple HARQ operation is possible assuming a reliable feedback signaling in the downlink as one UE communicates with one single Node B. The Node B informs UE whether transmission was successful by sending an acknowledgement ACK or requests for a retransmission by signaling a negative acknowledgement NAK. To ensure the synchronization of the HARQ protocol status in sender and receiver side, a reliable feedback signaling is necessary.

On the uplink, the UE informs the Node B based on ACK/NAK feedback messages, if transmission of a new packet has been started for the given HARQ process. By toggling the New Data Indicator (NDI), the Node B is told not to combine the packet with previous transmissions stored in the soft buffer of the corresponding HARQ process. (see 3GPP TSG RAN WG 1, meeting #31: "HARQ Overview" , Tdoc R1-030176, available at http://www.3gpp.org). If the NDI is toggled, the HARQ soft buffer for the corresponding HARQ process is flushed and then filled with the soft decision information of the new packet transmission.

A misinterpretation of the feedback signaled by Node B to UE would reduce the overall throughput and the Packet Error Rate (PER). In case of ACK to NAK misinterpretation the already correctly received packet would be resent, while for NAK to ACK misinterpretation the packet would be lost because the sender received an acknowledgement. Therefore large power offsets are required to guarantee a correct reception of the ACK/NAK signaling by UE. There is a trade-off between the overhead spent for reliable signaling and likelihood for erroneous protocol operation.

### HARQ OPERATION IN SOFT HANDOVER

In case of HARQ is employed during soft handover, UE in the uplink transmits to a multiplicity of Node Bs. One of the main problems for HARQ operation during soft handover is the synchronization of the HARQ soft buffers between multiple Node Bs. Not all active set Node Bs may be able to receive the associated control signaling from the UE, which is needed for a correct processing of the received packet. Since radio channels between the UE and different Node Bs from the active set are uncorrelated, it is very likely that there is one cell, which is the most suitable for the uplink reception. The corresponding Node B, which will be referred to as uplink Node B, is able to receive and decode the packets correctly whereas other Node Bs within the active set most likely do not successfully receive some packets.

Transmission of new packets will continue to the uplink Node B while in other Node Bs previously received packets are still stored in the corresponding soft buffers. In a window based HARQ protocol, it should not happen that a packet is received with same sequence number as an old data packet in the soft buffer. In this case, the HARQ window has been advanced while the soft buffer has not been flushed. This phenomenon is called wrap around problem. For N-channel Stop-and-Wait protocol the issue is the similar. The same HARQ process number should not be scheduled again for a new data packet unless this is indicated and the corresponding soft buffers at the Node Bs that contain stored data associated with this process numbers are flushed.

Another problem, which occurs in case of HARQ operation during soft handover, is that each Node B within active set signals feedback on the downlink. Since the UE may receive different ACK/NAK messages from the active set's Node Bs, it cannot benefit from soft combining for ACK/NAK decoding. Since the downlink is critical for the capacity of systems with W-CDMA air interface, signaling feedback from each Node B with increased power may degrade capacity without providing significant increase in ACK/NAK reliability.

In WO 02/37872 a method is introduced that suggests an HARQ operation during soft handover in the uplink. It is proposed to increase reliability of the HARQ operation during soft handover by adding a flush bit to the associated HARQ control signaling in the uplink. The flush bit indicates to the Node Bs whether to combine a current packet with previous transmissions or to flush the current soft buffer of the corresponding HARQ process. The additional control signaling may increase the reliability of the HARQ operation, however the method has two drawbacks. Sending additional control information on the uplink requires that the transmitter knows the HARQ status of the receivers, because it has to inform them when to flush the buffer. Another drawback is that the flush bit needs to be transmitted with a high reliability. This requires a large power offset and will hence increase the air interface signaling overhead and will reduce system capacity.

GB 2 369 961 relates to transmission control in a radio access network. The document teaches that in a UMTS communication system packets of data are routed from a core network to a user equipment (and vice-a-versa) to a radio network controller and associated base station. To reduce delay the ARQ mechanism may be implemented in the base station and the UE rather that in the RNC and UE. This however, may lead to problems when the UE is in soft handover between a plurality of base stations as one of the base stations may receive acknowledgement or negative acknowledgement signals from the UE for packets which have not yet been transmitted.

To mitigate this problem GB 2 369 961 addresses the need for some sort or synchronisation between the transmission buffers of base stations. With respect to uplink transmissions the document teaches that all base stations communicating with the user equipment during handover send ARQ status messages to the UE and in case of conflicting ARQ status messages, the UE selects one of the base stations and responds only to ARQ status messages generated at this selected base station until a complete SDU has been acknowledged by this base station. Alternatively, GB 2 369 961 suggests that the UE may only retransmit packets which have not been received by any of the base stations correctly. The base station receiving the retransmitted packets may forward those packets to a master base station which passes a completed SDU to the higher layers.

### SUMMARY OF THE INVENTION

The object of the present invention is to prohibit the wrong combination of data packets in base stations participating in the active set of a particular communication terminal (UE). This method should also be applicable to enable HARQ data packet retransmissions on the uplink during a soft handover. Further, the signaling over the air interface during a soft handover should be reduced.

This object is solved by the invention as claimed in the independent claims. Different embodiments of the present invention are defined in the dependent claims.

Accordingly, the HARQ soft buffer status of the active set's Node Bs is updated or synchronized during uplink HARQ operation in a soft handover by sending control information from each Node B within the active set to other active set's Node Bs. Further, one selected serving Node B from the active set may send a feedback message comprising e.g. an HARQ ACK/NAK to the UE.

In one embodiment, the present invention provides a data transmission method for use in a mobile communication system comprising a communication terminal and a plurality of base stations. According to the method, the communication terminal is in communication with the plurality of base stations during a soft handover. It should be noted that the plurality of base stations may not refer to all base stations that are controlled by a control unit or a plurality of control units in the mobile communication network, but rather to the base stations communicating with the communication terminal during soft handover. In UMTS this plurality of base stations may be referred to as the active set of the communication terminal. Hence, the plurality of base stations may be a subset of the base stations available for communication in the mobile communication network.

The method comprises the steps of receiving a data packet from the communication terminal at the plurality of base stations and checking data integrity of the received data packet at each of the base stations. The data packet may e.g. be received via a dedicated channel (DCH), such as an enhanced uplink dedicated channel (E-DCH). It is noted that the usage of the present invention is not limited to the E-DCH. Checking the data integrity may be done by verifying the incorruption of the received data, e.g. by means of a cyclic redundancy check (CRC).

If data integrity of the received data packet was not acknowledged (or confirmed) by a base station, the received data packet is stored in a buffer of the respective base station. If data integrity of the received data packet was acknowledged by a base station, the respective base station transmits control information to at least one other base station of the plurality of base stations, wherein the control information indicates that the data integrity of the received data packet was acknowledged.

According to another embodiment, in response to receiving the control information at the other base stations, those flush their buffer in case the respective base station receiving the control information did not acknowledge data integrity of the received data packet.

In order to reduce the signaling on the air interface between the UE (communication terminal) and the RAN only one of the plurality of base stations transmits a feedback message to the communication terminal indicating whether at least one of the plurality of base stations acknowledged data integrity of the received data packet. Hence, by sending only a ACK/NAK from one of the base stations, the so-called serving Node B, to the communication terminal, the signaling on the air interface (Uu interface) may be significantly be reduced and the advantage of a synchronized state of the base stations' soft buffers may be further exploited.

To solve special soft buffer status problems - which will described in more detail further down below - which may result in a faulty combination of data packets, it is of further advantage if a base station that did not acknowledge data integrity of the received data packet transmits control information to at least one other base station of the plurality of base stations, wherein the control information indicates that the data integrity of the received data packet was not acknowledged.

Further, the one base station transmitting the feedback message to the communication terminal may determine whether at least one of the plurality of base stations acknowledged data integrity of the received data packet by evaluating the control information received from the other base stations prior to transmitting the feedback message to the communication terminal. By this determination of the status of the received data packets, the method allows to advantageously exploit the advantages of a synchronized state of the soft buffers in the base stations to reduce air interface signaling (Uu signaling) from the base stations to the communication terminal.

The serving Node B may be selected by the radio network controller. Therefore the method further comprises the step of selecting the one base station for transmitting the feedback message to the communication terminal by a control unit connected to each base station of the plurality of base stations.

It may be important to select a Node B from the UE's active set that is capable of providing reliable feedback to the UE as the serving Node B. Consequently, the control unit may evaluate downlink channel quality information indicating the downlink channel qualities between the communication terminal and each base station of the plurality of base stations. Advantageously, the control unit's selection of the one base station for transmitting the message to the communication terminal is based on the evaluation result. By these steps, the RNC may ensure the appropriate selection of a base station that provides reliable feedback to the UE.

This may be especially applicable to the current R99/4/5 UTRAN architecture, where the different Node Bs are not interconnected directly, i.e. data among the base stations is transmitted via the RNC as a "switching" entity, where the RNC may control the selection of the serving Node B. Hence, control information may be transmitted from a transmitting base station via the control unit to the destination base station.

In case of an evolved UTRAN architecture, in which the single Node B+s of an active set are interconnected directly, the base stations in the active set may autonomously select their serving Node B+ to the communication terminal in soft handover.

Each base station of the plurality of base stations determines downlink channel quality information indicating the downlink channel quality between the communication terminal and the respective base station. Further, each base station of the plurality of base stations may transmit the determined downlink channel quality information to the other base stations of the plurality of base stations. Each base station of the plurality of base stations may receive the transmitted downlink channel quality information from the other base stations of the plurality of base stations and may evaluate the downlink channel quality information received from the other base stations and the downlink channel quality information determined by itself to determine the best downlink channel quality characteristic. Finally, the base station having the best downlink channel quality characteristic transmits the message to the communication terminal.

Once a base station has been selected as the serving Node B+, this base station may further delegate its role to another base station in the UE's active set. If the one base station transmitting the feedback message to the communication terminal determines that another base station has the best downlink channel quality characteristic, the one base station may transmit a selection message to the other base station assigning to the other base station the task of transmitting a feedback message to the communication terminal for future data integrity acknowledgement.

In the process of determining the base station having the best downlink channel quality characteristic, each base station of the plurality of base stations may determine downlink channel quality information indicating the downlink channel quality between the communication terminal and the respective base station. Further, each base station of the plurality of base stations except the base station transmitting the feedback message to the communication terminal, may transmit the determined downlink channel quality information to the base station transmitting the feedback message.

The one base station transmitting the feedback message may receive the transmitted downlink channel quality information from the other base stations of the plurality of base stations, and may evaluate the downlink channel quality information received from the other base stations and the downlink channel quality information determined by itself to determine the best downlink channel quality characteristic.

Independent of the underlying UTRAN architectures, the evaluation of the downlink channel quality information may comprise the step of averaging parameters in the downlink channel quality information, wherein the evaluation is based on the averaged downlink channel quality. This prevents unwanted ping-pong effects or fast fading, where the actual serving Node B+ or the RNC assigns the task of transmitting feedback to the UE to another base station at a high frequency due to rapidly changing downlink channel characteristics.

To allow the further processing of successfully received data packets, the method may further comprise the step of forwarding the received data packet to a control unit in the mobile communication system by at least one of the base stations that did acknowledge data integrity of the received data packet. E.g. in case the MAC-eu entity is split between the Node B and the RNC, i.e. the HARQ entity responsible for packet retransmissions is located in the Node B and the reordering buffer for reordering the data packets in case they have been received out of order, one single or multiple Node Bs may forward the successfully received data packet to the reordering buffer of the RNC for further processing.

The synchronization of the buffers as outlined in the method above is also applicable to data retransmission, schemes such as HARQ. Therefore the present invention further provides a data packet retransmission method in a mobile communication system comprising a communication terminal and a plurality of base stations. The communication terminal is thereby in communication with the plurality of base stations during a soft handover. Further, each base station of the plurality of base stations comprises means for controlling and enabling data packet retransmissions between the respective base station and the communication terminal in accordance with a hybrid packet retransmission scheme and the means comprises a buffer updated using the method described above. The buffer may be used for storing data packets received at the respective base station for which data integrity was not acknowledged.

A variety of different retransmission schemes may be used. One example is a window based packet retransmission scheme using a receiver window to control packet retransmissions.

Employing a window based retransmission scheme, the control information exchanged among the base stations may comprise an identifier identifying the communication terminal and a pointer pointing to the upper edge or lower edge of the receiver window. Using these two parameters and the window size being previously configured through e.g. RRC signaling each base station receiving the information may uniquely identify the communication terminal and its associated soft buffer, e.g. in case more than one communication terminal currently is in a soft handover. Further, the pointer to the upper edge or lower edge of the receiver window identifies the valid retransmission processes. The buffer areas corresponding to invalid retransmission processes may be flushed.

In case a stop-and-wait packet retransmission scheme is used in which at least one data packet retransmission process is employed, the control information exchanged among the base stations may comprises an identifier identifying the communication terminal, a process number identifying a data packet retransmission process, and an indicator for indicating whether the data packet's integrity can be acknowledged. Again, the identifier identifies the UE and the corresponding soft buffer in soft handover operation. The indicator in the signaled control information instructs the receiving base stations to flush the buffer corresponding to the signaled retransmission process number.

For both packet retransmission schemes, the identifier identifying the communication terminal may be omitted in the signaling e.g. in case the identifier may be derived from already existing information in the transmitted data.

The control information exchanged among the base stations further may further comprise a sequence number or a data indicator identifying the received data packet, and which indicates whether the received packet has to be combined with at least one previously received data packet at the receiving base station. The data indicator may e.g. be the New Data Indicator (NDI).

A further advantage of using the above mentioned parameters in the signaling between the base stations of the UE's active set is that all parameters are readily available from the information exchanged between the UE and the respective base station during a soft handover and no additional signaling of these parameters over the air interface is needed.

The methods described above may be advantageously used in each of the base stations serving a communication terminal during a soft handover. Therefore the present invention also provides a base station in a wireless communication system comprising a communication terminal and a plurality of base stations, wherein the communication terminal is in communication with the plurality of base stations during a soft handover and wherein the base station comprises means for implementing the methods described above.

### BRIEF DESCRIPTION OF THE FIGURES

In the following the present invention is described in more detail in reference to the attached figures and drawings. Similar or corresponding details in the figures are marked with the same reference numerals.
- **Fig. 1**: shows the high-level architecture of UMTS,
- **Fig. 2**: shows the architecture of the UTRAN according to UMTS R99/4/5,
- **Fig. 3**: shows a Drift and a Serving Radio Subsystem,
- **Fig. 4**: shows the evolved UTRAN architecture.
- **Fig. 5**: shows the E-DCH MAC architecture at a UE,
- **Fig. 6**: shows the MAC-eu architecture at a UE,
- **Fig. 7**: shows the MAC-eu architecture at a Node B,
- **Fig. 8**: shows the MAC-eu architecture at a RNC,
- **Fig. 9**: shows a prior-art flow chart of HARQ receiver operation,
- **Fig. 10**: shows a flow chart of HARQ receiver operation for a R99/4/5 UTRAN architecture according to an embodiment of the present invention, and
- **Fig. 11**: shows a flow chart of HARQ receiver operation for an evolved UTRAN architecture according to an embodiment of the present invention.

### DETAILED DESCRIPTION OF THE INVENTION

The synchronization of the soft buffer of the active set's Node Bs during uplink HARQ operation in soft handover will be described in detail in relation to different underlying UMTS architectures. Nevertheless the present invention is not limited to UMTS communication system. Rather, the principles underlying the present invention may be applied to other communication systems as well.

According to an embodiment of the present invention, the MAC-eu functional entities reside in the S-RNC and Node B. The MAC-eu is terminated in the S-RNC. Consequently, the reordering buffer of is located in the RNC as depicted in Fig. 8 while the different HARQ entities reside at the base stations of the active set as depicted in Fig. 7.

It is also mentioned that it is generally possible to terminate the MAC-eu in the Node Bs of the active set, i.e. each Node B would have to be equipped with a packet reordering buffer to reassemble data packets received out of order. However, in this scenario it is not possible to exploit the macro diversity gain resulting from the soft handover, as the presence of multiple Node Bs receiving uplink information may not be exploited for packet retransmission using e.g. a HARQ scheme due to mutually uncorrelated reordering delays.

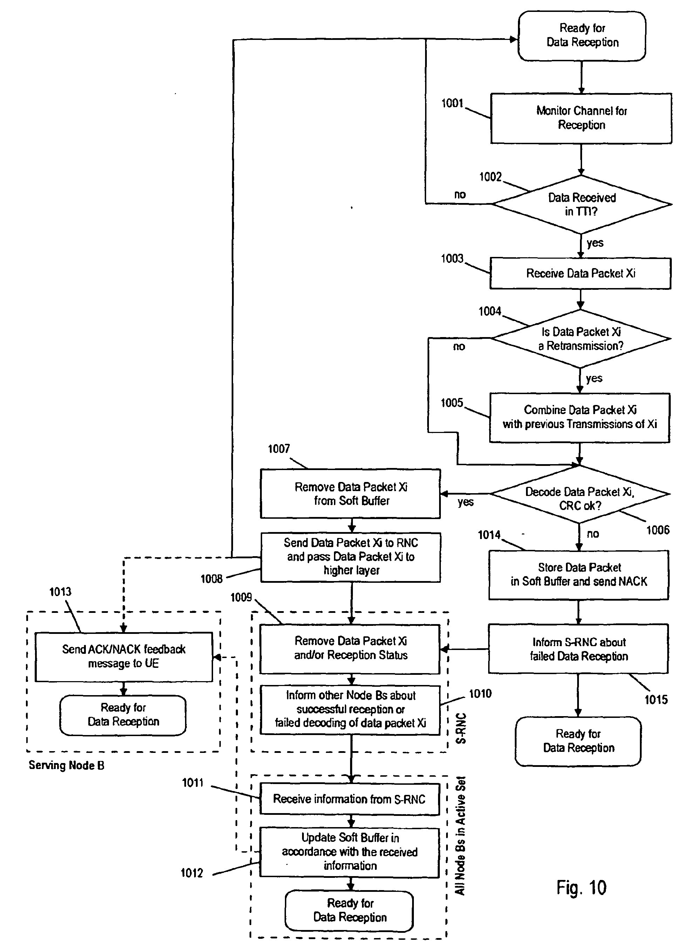

A flow chart of the soft buffer synchronization procedure for the R99/R4/R5 UTRAN architecture shown in Fig. 10. The figure shows the operation of an arbitrary Node B from the active set.

In step 1001 each base station within the active set monitors a physical uplink data channel, e.g. the enhanced dedicated physical data channel (E-DPDCH) for the reception of uplink traffic. In case a data packet is received in step 1002 within a TTI interval (transmission time interval), Node B receives the data packet in step 1003 and decides if the packet is an initial transmission or a retransmission of a previously received packet (see step 1004). The decision may be based on associated uplink control signaling, e.g. the New Data Indicator (NDI) or other outband signaling. When using outband signaling a separate control signal comprising the control parameters may be generated and transmitted.

In case in step 1004 it is decided that the received packet is a retransmission, Node B may combine the received data packet with data packets received previously before decoding in step 1005. The data packets received previously and which could not be decoded are stored in the soft buffer of the respective base station. For an initial transmission the base station may immediately try to decode the packet upon reception (see step 1006).

The testing in step 1006 whether decoding is successful or not may e.g. be done by evaluating a CRC checksum. The successfully decoded packet may be deleted from the soft buffer in case information related thereto has been stored therein in step 1007. In case decoding is not successful the combined soft information may be stored (see step 1014) in the soft buffer and the S-RNC may be informed about the event in step 1015. If the packet has been decoded correctly, the base station may send the decoded data packet to a control unit in step 1008, e.g. the S-RNC via lub/lur interface.

According to an embodiment of the present invention, upon having received 1009 the decoded data packet via the lub/lur interface, the S-RNC may inform the other Node Bs within the active set about the correct/incorrect decoding of a packet by sending control information in step 1010. Upon receiving the information from S-RNC in step 1011 the other Node Bs within the active set may update their soft buffer content in step 1012.

In case the Node B fails to successfully decode the received data packet or its combination with previously received data packets, the received data packet may be inserted in the soft buffer in step 1014. Further, as described above, all other base stations of the active set may be informed about this event in step 1010.

Further, the serving Node B may send a feedback message to UE (see step 1013) based on the control information from other active set Node Bs. In case at least one Node B decoded the packet correctly, an ACK is signaled to UE in the feedback message, otherwise a NAK is sent. Hence, in case one of the base stations of the active set successfully decoded a received data packet no further retransmission has to be sent from the communication terminal (UE) to those base stations, which have not successfully decoded the data packet. Further, based on the signaling between the base stations, those base stations that have not been able to decode the data packet may flush their soft buffer such that all soft buffers of the different base stations within the active set serving the UE during soft handover are synchronized, i.e. are in the same state at the end of each TTI.

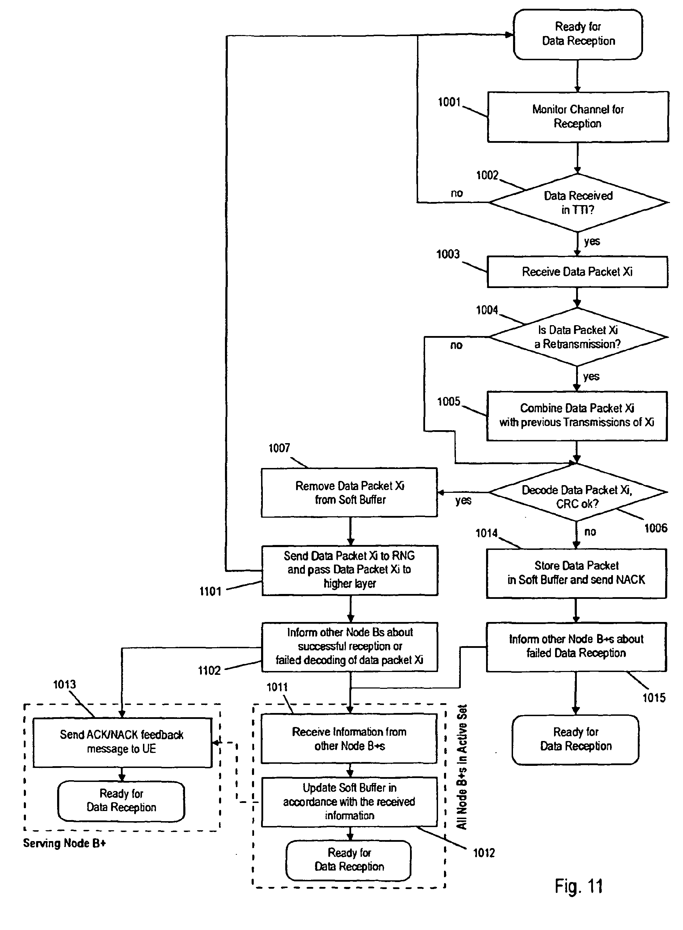

It is noted that the arrow connecting the blocks 1008 and 1013 in Fig. 10 (blocks 1102 and 1013 in Fig. 11) indicates the case, where the Node B successfully decoding the received data packet is the serving Node B. In this case a feedback message to the UE may be immediately sent.

In case the respective Node B is the serving Node B but has not been able to decode the received data packet correctly (see arrow between blocks 1012 and 1013 in Fig. 10 and Fig. 11), it has to await the evaluation of the control information from the other base stations within the active set before sending the feedback message to the UE. However, in case of a careful serving Node B selection, as will be discussed in more detail further down below, the probability that a Node B is the serving Node B and is not able to receive and decode a data packet correctly is low.

Fig. 11 shows a flow chart of the soft buffer update i.e. synchronization procedure for the evolved UTRAN architecture. As Fig. 10, this figure shows the operation of an arbitrary base station from the active set. Corresponding functional blocks in the two figures have been assigned the same reference numerals.

In step 1001 each Node B+ within active set monitors a physical uplink data channel, e.g. the enhanced dedicated physical data channel (E-DPDCH) for the reception of uplink traffic. In case a packet is received within a TTI in step 1002, the base station has to decide in step 1003 if the packet is an initial transmission or a retransmission of a previously received data packet. The decision is based on associated uplink control signaling as explained earlier in reference to Fig. 10. In case the received packet was a retransmission, then Node B+ may combine the received data packet with previous transmissions stored in the soft buffer before decoding in step 1005. For an initial transmission Node B+ may immediately decode the packet upon reception in step 1006.

The testing whether decoding was successful or not (see step 1006) may be done e.g. by evaluating a CRC checksum in the received data packet.

If the decoding of the received data packet has been successful, possible previous transmissions of that packet may be deleted from the soft buffer in step 1007.In case decoding is not successful the soft information may be stored in the soft buffer in step 1014 and other Node B+s within active set are informed about that event in step 1015. If the packet is received correctly, Node B+ passes the packet to higher layer in step 1101, e.g. to a packet reordering entity as depicted in Fig. 8 Further, the respective Node B informs other Node B+s within active set (see step 1102) about the correct decoding of the packet via the lur+ interface by sending control information. As the radio interface related functions are completely moved to the enhanced base stations, the signaling path does not have to include the RNG. In the R99/4/5 UTRAN architecture the signaling has to pass the attached RNC to which forwards the data transmitted to the other Node Bs.

Upon receiving the control information from the other Node B+s via the lur+ interface, all Node B+s within the active set update their soft buffer content in step 1012. As explained earlier, in case one of the signaled control information received from the other Node Bs indicates the successful reception of the data packet within a TTI, the respective Node B+ may flush its soft buffer corresponding to the received data packet. It is noted that either all other Node B+s or only those NodeB+s that successfully received and decoded the data packet may transmit control information.

The serving Node B may then send feedback message to UE based on the control information from other active set Node B+s in step 1013. In case at least one Node B+ decoded the packet correctly an ACK is signaled to the UE, otherwise a NAK is sent.

As outlined above in relation to different UTRAN architectures the synchronization of the HARQ soft buffer of the base stations within the active set is done by sending control information from each base station to the other active set's base stations. In the following paragraphs the parameters comprised in the control information are described in more detail.

In order to ensure a reliable HARQ protocol operation during soft handover, the control information should include an ACK/NAK, that is a positive or negative acknowledgement for the data packet that is currently received by the base stations of the active set, an indicator for indicating a new data packet, i.e. a data packet with a new sequence number, such as the New Data Indicator (NDI) and a retransmission process number, e.g. the HARQ process number. Further, the control information may comprise an identification of the UE which has sent the received packet in the current TTI. This identification may be explicitly signaled within frames of the frame protocol (FP) or it can be read from already existing inband information in the header of MAC packets.

The HARQ process number identifies a region in the buffer of each base station used for each HARQ process. Alternatively, instead of using different buffer regions for HARQ processes, separated buffers may be employed. By employing separated buffer areas of storage associated with a process number of the used packet retransmission scheme or a plurality of buffers, a plurality of data packets and possible necessary retransmission may be handled by the different HARQ entities shown in Fig. 7. The selected HARQ process thereby depends on the HARQ process number that may be signaled from the UE to the Node Bs via outband signaling. Each of the HARQ processes may be associated with a single buffer as explained above or may utilize a defined area or storage space in the soft buffer, whereby the areas are associated with the respective process.

Sending reliable feedback from multiple receivers to the transmitter is one of the major problems when implementing HARQ in a soft handover scenario. In theory all Node Bs receiving the data packet transmitted from an UE may provide feedback in form of ACK/NAK signaling. However, it is preferred that only one Node B, i.e. a selected serving Node B signals ACK/NAK feedback to UE in the downlink, because by choosing this feedback variant the per-cell the OVSF (Orthogonal Variable Spreading Factor) code consumption and transmit power resources are minimized. The selected Node B for signaling the feedback to the communication terminal may also wait for reception and evaluation of the other base stations' control information before transmitting the feedback message to the communication terminal.

In order to avoid protocol errors caused by misinterpretations, the feedback message needs to be very reliable i.e. the serving Node B should to be chosen appropriately. For example, the serving Node B could be chosen by applying criteria based on channel measurements, e.g. the SNR. For UMTS measurements results like CPICH E_{c}/N₀ or CPICH RSCP (CPICH = Common Pilot Channel, RSCP = Received Signal Code Power) are defined and may be used. RSCP may be defined as the received power on one orthogonal code measured on the Primary CPICH. But in this case the resources which are critical for the downlink - orthogonal codes and Node B transmission power - are not considered.

Therefore a selection criterion based on a trade off between HARQ feedback reliability and downlink capacity could be applied for choosing serving Node B. The selection of serving Node B may e.g. be implemented by simple S-RNC notification over lub/lur interface by using messages of NBAP/RNSAP protocols or control frames of the FP (frame protocol). Thereby, the signaling information between the base stations may be used for two purposes: to synchronize the soft buffer and to generate a single feedback signal valid for all Node Bs in the active set which is sent only by the serving Node B as outlined above.

The synchronization of the soft buffer of the active set Node Bs may be accomplished by signaling control information from each Node B of the active set to the other active set Node Bs. This principle is independent of the underlying UMTS architecture employed. Each Node B or the Node Bs only, which successfully decoded a packet may inform the other active set Node Bs about the result of decoding. Therefore, to achieve a synchronization of the soft buffer with all other Node Bs, each Node B of the active set has to await for reception of control information from all other active set Node Bs. The time that is required to inform the other active set members may be different for each Node B. There are several reasons for a variation of the signaling delays.

For example the Node Bs of the UE'S active set may be located in different Radio Network Subsystems (RNS), the amount of lub/lur traffic from Node B to S-RNC may vary for active set's Node Bs, the time required for processing the received data packet, e.g. decoding, is different for the Node Bs in the active set and/or the traffic over lub/lur interface may be based on different transport technologies.

Hence, to synchronize the soft buffer of all active set's Node Bs, it has to be ensured that each Node B awaits for the of control information from the other Node Bs within active set before processing the next received data packet in the next TTI. Due to the fact that the Node Bs may not be aware of the size of the active set and the different signaling delays for the control information, the Node Bs do not know the time interval in which possible control information may be received from the other Node Bs within the active set. According to another embodiment of the present invention the serving Node B or all Node Bs are therefore informed about the active set of a UEs by the respective UE using e.g. inband or outband signaling on a uplink transport channel e.g. E-DCH.

Another alternative solution to inform the serving Node B or all Node Bs in the active set about the size and/or Node Bs of the active set may be to restrict the Node Bs within active set to those only that are within the same RNS. A certain amount of time may be then defined within which each Node B has to wait for a possible reception of control information from the other active set's Node Bs. For this purpose a timer may be started which defines the time period in which all signaling has to be received. If the timer expires is it assumed that there is no other signaling to be expected and the soft buffer can be synchronized as outlined above and the serving Node B may send a message comprising an ACK/NAK to the UE. The timer value may be configurable to take into account different signaling delays as described above.

Hence, each base station may run a timer which defines the time frame in which the control information from other base stations are expected to be received. Only control information within this time frame are considered during the evaluation.

In another embodiment of the present invention each Node B informs all other active set Node Bs about the successful/unsuccessful decoding of a packet by using the soft buffer synchronization procedure. This may require an increased traffic load due to lub/lur (R99/4/5 architecture) and lur+ signaling (Evolved UTRAN).

In order to reduce the amount of control signaling, the Node Bs may inform each other only about acknowledged packets. Although this may serve for the generation of a reliable feedback signaling, the soft buffer may not be synchronized correctly if the retransmission of the packets by the UE are aborted due to exceeding the maximum number of retransmissions. In this case the UE will not transmit additional information supplementing previously received erroneous data packets but will adopt to the new channel conditions and retransmit the original (or initially transmitted) data packet to the receiving Node Bs again.

In order to ensure a synchronization of the soft buffers at the different base stations in that case, the Node Bs may inform the other active set's Node Bs about this event. The corresponding soft buffer has to be flushed when a packet is aborted on UE side. As an example, the signaling message may comprise parameters ACK (signals the discarding of a packet on UE side and the flushing of the corresponding soft buffer), the process number used to identify retransmissions of different data packets (e.g. HARQ process number) and an UE identification. As explained above, the signaling of the UE identification is not always necessary and may be therefore omitted.

According to this embodiment of the present invention the synchronization procedure allows to significantly reduce the amount of control signaling. Besides the fact that each Node B informs the other active set's Node Bs only about acknowledged packets and about discarding of a packet on UE side by using ACK, the signaling of a New Data Indicator (NDI) within the control information may be omitted in soft buffer synchronization procedure.

In another embodiment only the serving Node B is informed about the decoding status of a data packet. After receiving this information the serving Node B may inform all Node Bs from the active set whether the transmitted packet was correctly decoded or not. The active set Node Bs may then update their soft buffer content accordingly. By sending only control information to serving Node B, the amount of control signaling over lub/lur interface or lur+ interface can be further reduced. For example, for the active set size of 4, the number of signaling messages is reduced from 12 to 6. However, this is traded-off for increased delay because the serving Node B has to wait for all the signaling messages of the other Node Bs first before informing the other Node Bs of the active set.

Another embodiment of the present invention only the serving Node B informs the other base stations in the active set, whether it received and/or a data packet correctly. Proved that serving Node B correctly receives and decodes data packets on the uplink, the signaling load may be significantly reduced.

Only in case the serving Node B failed to received and/or decode the data packet correctly, the other node Bs in the active set would provide serving Node B with their control information indicating whether the respective Node B has been able to receive and/or decode the data packet. Alternatively, the other Node Bs may each inform all other Node Bs in the active set about the reception/decoding status of the data packet. In the latter case an additional signaling of the reception/decoding status from the serving Node B to the other Node Bs in the active set may be omitted. As explained above, the reduction of the amount of lur+ control signaling is again traded-off for increased delay because the serving Node B has to wait for all the signaling messages of the other Node Bs first before informing the other Node Bs of the active set and being capable of sending an appropriate feedback message to the UE.

In a window based HARQ protocol each transmitted packet is associated with a sequence number. The range of sequence numbers of packets that the transmitter is allowed to transmit or retransmit at a given time may be defined by a transmitter window. Similarly, a receiver window determines the range of the sequence numbers of data packets that are accepted.

The position of the receiver/transmitter window is characterized by two parameters, the upper or lower edge of the window and the window size. The window size is most often a semi-static parameter which is configured by the RNC using RRC signaling. To ensure a correct HARQ operation during soft handover, the receiver windows of the Node Bs within active set may be synchronized. Therefore the control information exchanged the members or an active set may comprise the upper edge or lower edge of the receiver window and an UE identification. Again as outlined above the UE identification may be omitted in special cases. By these parameters and assuming that the size of the receiver/transmitter window is signaled by the RNC, a range of valid sequence numbers for data packets received at the Node Bs may be defined. A soft buffer storage area corresponding to a succession of invalid sequence numbers may then be deleted at each of the Node Bs. Each Node B may be inform the other active set Node Bs about parameters of an updated receiver window.

Though the present invention has been described in reference to the UMTS, it is also related to other mobile communication systems that employ a packet retransmission scheme as HARQ on the uplink during soft handover.

Further it is noted that the base stations within an active set may also reside in different RNSs or be attached to different RNGs. In these cases, the signalling between the base stations evolved during soft handover has to be ensured, i.e. the RNCs/RNGs to which the Node Bs of the active set are attached may forward the control information among each other via the lur interface.

Further it is noted that the radio access network architecture, the actual deployment, the transport technology etc. may imply different delays on lub/lur interfaces. Depending on these delays it may be beneficial to a combination of signalling control information between the base stations in an active set and the usage of timers to define time frames in which retransmissions of data packet with a specific sequence number may occur. For short signalling delays within the network, e.g. in case all Node Bs are part of the same cluster or Radio Network Subsystem), it may be beneficial to use a buffer update method as disclosed by this application while for larger delays a timer based buffer update as proposed in the copending European application entitled "Time monitoring of Packet Retransmissions during Soft Handover", publication no. EP 1 507 352 A1 may be used. Both methods may also be used in parallel. For example the timer will be superseded by control information received by the base station or vice versa.

In this application it has been described how the amount of control signalling in the UTRAN may be reduced by sending just a positive feedback i.e. the Node Bs inform each other only about successfully received and decoded data packets. Alternatively, reduction in the amount of signalling may be achieved by sending the control information just from serving Node B on the wired interface to other Node Bs, as described in the copending European application entitled "Serving Base Station selection during Soft Handover", publication no. REP 1 507 422 A1. In the following, a step-wise procedure analogous to the one described in the co-pending application EP 1 507 422 A1 will be described. As mentioned above, in the first step of the soft buffer synchronization procedure only the serving Node B may send control information, comprising ACK/NAK etc., to the other Node Bs within active set. This information will be evaluated by other Node Bs. In the second step of the procedure, which would ensure the exchange of control information among other Node Bs within active set, could be triggered if serving Node B has sent NAK,. In this context, the proper selection of a serving Node B for lub/lur interface signalling may ensure that only one step in the above described procedure would have to be executed in most cases.

## Claims

1. An uplink data transmission method for use in a mobile communication system comprising a communication terminal and a plurality of base stations, the communication terminal being in communication with said plurality of base stations during a soft handover, the method comprising the steps of:
receiving (1005) an uplink data packet from the communication terminal at the plurality of base stations,
checking (1006) the data integrity of the uplink data packet at each of the base stations, and
if data integrity of the uplink data packet was not acknowledged by a base station, storing (1014) the uplink data packet in a soft-buffer of the respective base station,
**characterized by**
if data integrity of the received data packet was acknowledged by a base station, transmitting (1102) control information from the respective base station to at least one other base station of said plurality of base stations, wherein the control information indicates that the data integrity of the uplink data packet was acknowledged, and
in response to receiving said control information at said at least one other base station, flushing (1012) the soft-buffer at each base station that did not acknowledge data integrity of the uplink data packet.

2. The method according to claim 1, further comprising the step of:
transmitting a feedback message from one of said plurality of base stations to the communication terminal indicating whether at least one of said plurality of base stations acknowledged data integrity of the received data packet.

3. The method according to claim 1 or 2, **characterized by** further comprising the step of:
if a base station did not acknowledge data integrity of the uplink data packet, transmitting control information from said base station to at least one the other base stations of the plurality of base stations, wherein the control information indicates that the data integrity of the uplink data packet was not acknowledged.

4. The method according to one of claims 1 to 3, **characterized in that** said one base station transmitting the feedback message to the communication terminal determines whether at least one of said plurality of base stations acknowledged data integrity of the uplink data packet by evaluating the control information received from said other base stations prior to transmitting the feedback message to the communication terminal.

5. The method according to one of claims 1 to 4, **characterized in that** said control information is transmitted from a transmitting base station via a control unit to a destination base station.

6. The method according to one of claims 1 to 5, **characterized by** comprising the step of selecting said one base station for transmitting said feedback message to the communication terminal by a control unit connected to each base station of said plurality of base stations.

7. The method according to claim 6, **characterized in that** said control unit evaluates downlink channel quality information indicating the downlink channel qualities between the communication terminal and each base station of the plurality of base stations, and
selects said one base station for transmitting the feedback message to the communication terminal based on the evaluation result.

8. The method according to claim 1, **characterized by** further comprising the steps of:
each base station of said plurality of base stations determining downlink channel quality information indicating the downlink channel quality between the communication terminal and the respective base station,
each base station of said plurality of base stations transmitting said determined downlink channel quality information to the other base stations of said plurality of base stations,
each base station of said plurality of base stations receiving the transmitted downlink channel quality information from the other base stations of said plurality of base stations,
each base station of said plurality of base stations evaluating the downlink channel quality information received from said other base stations and the downlink channel quality information determined by itself to determine the best downlink channel quality characteristic, and
the base station having the best downlink channel quality characteristic transmitting said feedback message to the communication terminal.

9. The method according to claim 1, **characterized by** further comprising the step of:
if said one base station transmitting said feedback message to the communication terminal determines that another base station has the best downlink channel quality characteristic, transmitting a selection message from said one base station to said other base station assigning to said other base station the task of transmitting a feedback message to the communication terminal for future data integrity acknowledgement.

10. The method according to claim 9, **characterized in that** the determination of said base station having the best downlink channel quality characteristic comprises the steps of:
each base station of said plurality of base stations determining downlink channel quality information indicating the downlink channel quality between the communication terminal and the respective base station,
each base station of said plurality of base stations except the base station transmitting the feedback message to the communication terminal, transmitting said determined downlink channel quality information to said base station transmitting said feedback message,
said one base station transmitting said feedback message receiving the transmitted downlink channel quality information from the other base stations of said plurality of base stations, and evaluating the downlink channel quality information received from said other base stations and the downlink channel quality information determined by itself to determine the best downlink channel quality characteristic.

11. The method according to one of claims 7 to 10, **characterized in that** the evaluation of the downlink channel quality information comprises the step of averaging parameters in the downlink channel quality information, wherein the selection is based on the averaged downlink channel quality.

12. The method according to one of claims 1 to 11, **characterized by** further comprising the step of:
forwarding the uplink data packet to a control unit in the mobile communication system by at least one of the base stations that did acknowledge data integrity of the uplink data packet.

13. The method according to one of claims 1 to 12, **characterized in that** the uplink data packet is received via a dedicated channel.

14. The method according to one of claims 1 to 13, **characterized in that** each base station of said plurality of base stations comprises means for controlling and enabling data packet retransmissions between the respective base station and said communication terminal in accordance with a packet retransmission scheme.

15. The method according to claim 14, wherein the retransmission scheme is a window based packet retransmission scheme using a receiver window to control packet retransmissions, and the control information exchanged among the base stations comprises a pointer pointing to the upper edge or lower edge of the receiver window.

16. The method according to claim 14, wherein the retransmission scheme is a stop-and-wait packet retransmission scheme with at least one retransmission process , and the control information exchanged among the base stations comprises a process number identifying a data packet retransmission process, and an indicator for indicating whether the data packet's integrity can be acknowledged.

17. The method according to claim 16, wherein the control information exchanged among the base stations further comprises a sequence number or data indicator identifying the uplink data packet at the receiving base station.

18. The method according to one of claims 14 to 17, wherein the control information exchanged among the base stations comprises an identifier identifying the communication terminal.

19. A base station in a mobile communication system comprising a communication terminal and a plurality of base stations including said base station, wherein the communication terminal is in communication with said plurality of base stations during a soft handover, and wherein said base station comprises:
receiving means for receiving an uplink data packet from the communication terminal, wherein the uplink data packet is further received by at least one other base station of said plurality of base stations,
means for checking the data integrity of the uplink data packet, and
a soft-buffer for storing the uplink data packet, if data integrity of the uplink data packet was not acknowledged by a base station
**characterized in that**
the receiving means is adapted to receive control information from the at least one other base station of said plurality of base stations, wherein the control information indicates whether the data integrity of the uplink data packet is acknowledged by the at least one other base station, and
the base station is adapted to flush the soft-buffer in response to said control information received from said at least one other base station.

## Patentansprüche

1. Uplink-Datensendeverfahren zum Einsatz in einem Mobilkommunikationssystem, das ein Kommunikations-Endgerät und eine Vielzahl von Basisstationen umfasst, wobei das Kommunikations-Endgerät während eines Softhandover mit der Vielzahl von Basisstationen kommuniziert und das Verfahren die folgenden Schritte umfasst:
Empfangen (1005) eines Uplink-Datenpaketes von dem Kommunikations-Endgerät von der Vielzahl von Basisstationen,
Prüfen (1006) der Daten-Integrität des Uplink-Datenpaketes an jeder der Basisstationen, und
wenn Daten-Integrität des Uplink-Datenpaketes durch eine Basisstation nicht bestätigt wurde, Speichern (1014) des Uplink-Datenpaketes in einem Soft-Puffer der entsprechenden Basisstation,
**gekennzeichnet durch**:
Senden (1102) von Steuerinformationen von der jeweiligen Basisstation zu wenigstens einer anderen Basisstation der Vielzahl von Basisstationen, wenn Daten-Integrität des empfangenen Datenpaketes **durch** die entsprechende Basisstation bestätigt wurde, wobei die Steuerinformationen anzeigen, dass die Daten-Integrität des Uplink-Datenpaketes bestätigt wurde,
Räumen (1012) des Soft-Puffers an jeder Basisstation, die Daten-Integrität des Uplink-Datenpaketes nicht bestätigt hat, in Reaktion auf das Empfangen der Steuerinformationen an der wenigstens einen anderen Basisstation.

2. Verfahren nach Anspruch 1, das des Weiteren den folgenden Schritt umfasst:
Senden einer Rückmeldungsmitteilung von einer der Vielzahl von Basisstationen zu dem Kommunikations-Endgerät, die anzeigt, ob wenigstens eine der Vielzahl von Basisstationen Daten-Integrität des empfangenen Datenpaketes bestätigt hat.

3. Verfahren nach Anspruch1 oder 2, **dadurch gekennzeichnet, dass** es des Weiteren den folgenden Schritt umfasst:
Senden von Steuerinformationen von einer Basisstation zu wenigstens einer der anderen Basisstationen der Vielzahl von Basisstationen, wenn eine Basisstation Daten-Integrität des Uplink-Datenpaketes nicht bestätigt hat, wobei die Steuerinformationen anzeigen, dass die Daten-Integrität des Uplink-Datenpaketes nicht bestätigt wurde.

4. Verfahren nach einem der Ansprüche 1 bis 3, **dadurch gekennzeichnet, dass** die eine Basisstation, die die Rückmeldungsmitteilung zu dem Kommunikations-Endgerät sendet, feststellt, ob wenigstens eine der Vielzahl von Basisstationen Daten-Integrität des Uplink-Datenpaketes bestätigt hat, indem die von den anderen Basisstationen vor Senden der Rückmeldungsmitteilung zu dem Kommunikations-Endgerät empfangenen Steuerinformationen bewertet werden.

5. Verfahren nach einem der Ansprüche 1 bis 4, **dadurch gekennzeichnet, dass** die Steuerinformationen von einer sendenden Basisstation über eine Steuereinheit zu einer Ziel-Basisstation gesendet werden.

6. Verfahren nach einem der Ansprüche 1 bis 5, **dadurch gekennzeichnet, dass** es den Schritt des Auswählens der einen Basisstation zum Senden der Rückmeldungsmitteilung zu dem Kommunikations-Endgerät durch eine Steuereinheit umfasst, die mit jeder Basisstation die Vielzahl von Basisstationen verbunden ist.

7. Verfahren nach Anspruch 6, **dadurch gekennzeichnet, dass** die Steuereinheit Downlinkkanal-Qualitätsinformationen bewertet, die die Downlinkkanal-Qualitäten zwischen dem Kommunikations-Endgerät und jeder Basisstation der Vielzahl von Basisstationen anzeigen, und
die eine Basisstation zum Senden der Rückmeldungsmitteilung zu dem Kommunikations-Endgerät auf Basis des Bewertungsergebnisses auswählt.

8. Verfahren nach Anspruch 1, **dadurch gekennzeichnet, dass** es des Weiteren die folgenden Schritte umfasst:
Bestimmen von Downlink-Qualitätsinformationen, die die Downlinkkanal-Qualität zwischen dem Kommunikations-Endgerät und der jeweiligen Basisstation anzeigen, durch jede Basisstation der Vielzahl von Basisstationen,
Senden der bestimmten Downlink-Qualitätsinformationen zu den anderen Basisstationen der Vielzahl von Basisstationen durch jede Basisstation der Vielzahl von Basisstationen,
Empfangen der gesendeten Downlinkkanal-Qualitätsinformationen von den anderen Basisstationen der Vielzahl von Basisstationen durch jede Basisstation der Vielzahl von Basisstationen,
Bewerten der Downlinkkanal-Qualitätsinformationen, die von den anderen Basisstatiönen empfangen werden, und der durch sie selbst bestimmten Downlink-Qualitätsinformationen durch jede Basisstation der Vielzahl von Basisstationen, um die beste Downlinkkanal-Qualitätscharakteristik zu bestimmen, und
Senden der Rückmeldungsmitteilung zu dem Kommunikations-Endgerät durch die Basisstation, die die beste Downlinkkanal-Qualitätscharakteristik hat.

9. Verfahren nach Anspruch 1, **dadurch gekennzeichnet, dass** es des Weiteren den folgenden Schritt umfasst:
Senden einer Auswahlmitteilung von der einen Basisstation zu der anderen Basisstation, mit der der anderen Basisstation die Aufgabe des Sendens einer Rückmeldungsmitteilung zu dem Kommunikations-Endgerät für zukünftige Bestätigung von Daten-Integrität übertragen wird, wenn die eine Basisstation, die die Rückmeldungsmitteilung zu dem Kommunikations-Endgerät sendet, bestimmt, dass eine andere Basisstation die beste Downlinkkanal-Qualitätscharakteristik hat.

10. Verfahren nach Anspruch 9, **dadurch gekennzeichnet, dass** die Bestimmung der Basisstation, die die beste Downlinkkanal-Qualitätscharakteristik hat, die folgenden
Bestimmen von Downlinkkanal-Qualitätsinformationen, die die Downlinkkanal-Qualität zwischen dem Kommunikations-Endgerät und der jeweiligen Basisstation anzeigen, durch jede Basisstation der Vielzahl von Basisstationen,
Senden der bestimmten Downlinkkanal-Qualitätsinformationen zu der Basisstation, die die Rückmeldungsmitteilung sendet, durch jede Basisstation der Vielzahl von Basisstationen bis auf die Basisstation, die die Rückmeldungsmitteilung zu dem Kommunikations-Endgerät sendet,
Empfangen der gesendeten Downlinkkanal-Qualitätsinformationen von den anderen Basisstationen der Vielzahl von Basisstationen und Bewerten der Downlinkkanal-Qualitätsinformationen, die von den anderen Basisstationen empfangen werden, und der durch sie selbst bestimmten Downlinkkanal-Qualitätsinformationen durch die eine Basisstation, die die Rückmeldungsmitteilung sendet, um die beste Downlinkkanal-Qualitätscharakteristik zu bestimmen.

11. Verfahren nach einem der Ansprüche 7 bis 10, **dadurch gekennzeichnet, dass** die Bewertung der Downlinkkanal-Qualitätsinformationen den Schritt des Mittelns von Parametern in den Downlinkkanal-Qualitätsinformationen umfasst, wobei die Auswahl auf der gemittelten Downlinkkanal-Qualität basiert.

12. Verfahren nach einem der Ansprüche 1 bis 11, **dadurch gekennzeichnet, dass** es des Weiteren den folgenden Schritt umfasst:
Weiterleiten des Uplink-Datenpaketes zu einer Steuereinheit in dem Mobilkommunikationssystem durch wenigstens eine der Basisstationen, die Daten-Integrität des Uplink-Datenpaketes bestätigt hat.

13. Verfahren nach einem der Ansprüche 1 bis 12, **dadurch gekennzeichnet, dass** das Uplink-Datenpaket über einen dedizierten Kanal empfangen wird.

14. Verfahren nach einem der Ansprüche 1 bis 13, **dadurch gekennzeichnet, dass** jede Basisstation der Vielzahl von Basisstationen eine Einrichtung zum Steuern und Freigeben von Datenpaketwiederholungen zwischen der jeweiligen Basisstation und dem Kommunikations-Endgerät entsprechend einem Paketwiederholungsverfahren umfasst.

15. Verfahren nach Anspruch 14, wobei das Wiederholungsverfahren ein Paketwiederholungsverfahren auf Fenster-Basis ist, bei dem ein Empfänger-Fenster zum Steuern von Paketwiederholung genutzt wird, und die zwischen den Basisstationen ausgetauschten Steuerinformationen einen Zeiger umfassen, der auf den oberen Rand bzw. den unteren Rand des Empfänger-Fensters zeigt.

16. Verfahren nach Anspruch 14, wobei das Wiederholungsverfahren ein Stop-and-Wait-Wiederholungsverfahren mit wenigstens einem Wiederholungsprozess ist und die zwischen den Basisstationen ausgetauschten Steuerinformationen eine Prozess-Nummer, die einen Datenpaket-Wiederholungsprozess identifiziert, sowie einen Indikator umfassen, der anzeigt, ob die Integrität des Datenpaketes bestätigt werden kann.

17. Verfahren nach Anspruch 16, wobei die zwischen den Basisstationen ausgetauschten Steuerinformationen des Weiteren eine Sequenz-Nummer oder einen Daten-Indikator umfassen, der das Uplink-Datenpaket an der empfangenden Basisstation identifiziert.

18. Verfahren nach einem der Ansprüche 14 bis 17, wobei die zwischen den Basisstationen ausgetauschten Steuerinformationen eine Kennung umfassen, die das Kommunikations-Endgerät identifiziert.

19. Basisstation in einem Mobilkommunikationssystem, das ein Kommunikations-Endgerät und eine Vielzahl von Basisstationen einschließlich der Basisstation umfasst, wobei das Kommunikations-Endgerät während eines Softhandovers mit der Vielzahl von Basisstationen kommuniziert, und wobei die Basisstation umfasst:
eine Empfangseinrichtung, die ein Uplink-Datenpaket von dem Kommunikations-Endgerät empfängt, wobei das Uplink-Datenpaket des Weiteren von wenigstens einer anderen Basisstation der Vielzahl von Basisstationen empfangen wird,
eine Einrichtung, die die Daten-Integrität des Uplink-Datenpaketes prüft, und
einen Soft-Puffer, der das Uplink-Datenpaket speichert, wenn Daten-Integrität des
**dadurch gekennzeichnet, dass**
die Empfangseinrichtung so eingerichtet ist, dass sie Steuerinformationen von der wenigstens einen anderen Basisstation der Vielzahl von Basisstationen empfängt, wobei die Steuerinformationen anzeigen, ob die Daten-Integrität des Uplink-Datenpaketes durch die wenigstens eine andere Basisstation bestätigt wird, und
die Basisstation so eingerichtet ist, dass sie den Soft-Puffer in Reaktion auf die von der wenigstens einen anderen Basisstation empfangenen Steuerinformationen räumt

## Revendications

1. Procédé de transmission de données de liaison montante pour utilisation dans un système de communication mobile comprenant un terminal de communication et une pluralité de stations de base, le terminal de communication étant en communication avec ladite pluralité de stations de base pendant un transfert souple, le procédé comprenant les étapes de :
recevoir (1005) un paquet de données de liaison montante à partir du terminal de communication à la pluralité de stations de base,
vérifier (1006) l'intégrité de données du paquet de données de liaison montante à chacune des stations de base, et
si l'intégrité de données du paquet de données de liaison montante n'a pas été reconnue par une station de base, stocker (1014) le paquet de données de liaison montante dans un tampon souple de la station de base respective,
**caractérisé par**
si l'intégrité de données du paquet de données reçu a été reconnue par une station de base, transmettre de l'information de contrôle de la station de base respective vers au moins une autre station de base de ladite pluralité de stations de base, où l'information de contrôle indique que l'intégrité de données du paquet de données de liaison montante a été reconnue, et
en réponse à la réception de ladite information de contrôle à ladite au moins une autre station de base, vider (1012) le tampon souple à chaque station de base qui n'a pas accusé réception de l'intégrité de données du paquet de données de liaison montante.

2. Procédé selon la revendication 1, comprenant par ailleurs l'étape de :
transmettre un message de rétroaction de l'une de ladite pluralité de stations de base au terminal de communication indiquant si au moins une de ladite pluralité de stations de base a accusé réception de l'intégrité de données du paquet de données reçu.

3. Procédé selon la revendication 1 ou 2, **caractérisé par** le fait de comprendre par ailleurs l'étape de :
si une station de base n'a pas accusé réception de l'intégrité de données du paquet de données de liaison montante, transmettre de l'information de contrôle de ladite station de base vers au moins une des autres stations de base de la pluralité de stations de base, où l'information de contrôle indique que l'intégrité de données du paquet de données de liaison montante n'a pas été reconnue.

4. Procédé selon l'une des revendications 1 à 3, **caractérisé en ce que** ladite une station de base transmettant le message de rétroaction au terminal de communication détermine si au moins une de ladite pluralité de stations de base a accusé réception de l'intégrité de données du paquet de données de liaison montante en évaluant l'information de contrôle reçue desdites autres stations de basé antérieurement à la transmission du message de rétroaction au terminal de communication.

5. Procédé selon l'une des revendications 1 à 4, **caractérisé en ce que** ladite information de contrôle est transmise d'une station de base de transmission via une unité de contrôle vers une station de base de destination.

6. Procédé selon l'une des revendications 1 à 5, **caractérisé par** le fait de comprendre l'étape de sélectionner ladite une station de base pour transmettre ledit message de rétroaction au terminal de communication par une unité de contrôle connectée à chaque station de base de ladite pluralité de stations de base.

7. Procédé selon la revendication 6, **caractérisé en ce que** ladite unité de contrôle évalue de l'information de qualité de canal de liaison descendante indiquant les qualités de canal de liaison descendante entre le terminal de communication et chaque station de base de la pluralité de stations de base, et
sélectionne ladite une station de base pour transmettre le message de rétroaction au terminal de communication sur la base du résultat d'évaluation.

8. Procédé selon la revendication 1, **caractérisé par** le fait de comprendre par ailleurs les étapes de :
chaque station de base de ladite pluralité de stations de base détermine de l'information de qualité de canal de liaison descendante indiquant la qualité de canal de liaison descendante entre le terminal de communication et la station de base respective,
chaque station de base de ladite pluralité de stations de base transmet ladite information de qualité de canal de liaison descendante déterminée aux autres stations de base de ladite pluralité de stations de base,
chaque station de base de ladite pluralité de stations de base reçoit l'information de qualité de canal de liaison descendante transmise à partir des autres stations de base de ladite pluralité de stations de base,
chaque station de base de ladite pluralité de stations de base évalue l'information de qualité de canal de liaison descendante reçue à partir desdites autres stations de base et l'information de qualité de canal de liaison descendante déterminée par elle-même pour déterminer la meilleure caractéristique de qualité de canal de liaison descendante, et
la station de base ayant la meilleure caractéristique de qualité de canal de liaison descendante transmet ledit message de rétroaction au terminal de communication.

9. Procédé selon la revendication 1, **caractérisé par** le fait de comprendre par ailleurs l'étape de :
si ladite une station de base transmettant ledit message de rétroaction au terminal de communication détermine qu'une autre station de base a la meilleure caractéristique de qualité de canal de liaison descendante, transmettre un message de sélection de ladite une station de base à ladite autre station de base assignant à ladite autre station de base la tâche de transmettre un message de rétroaction au terminal de communication pour accusé de réception futur d'intégrité de données.

10. Procédé selon la revendication 9, **caractérisé en ce que** la détermination de ladite station de base ayant la meilleure caractéristique de qualité de canal de liaison descendante comprend les étapes de :
chaque station de base de ladite pluralité de stations de base détermine de l'information de qualité de canal de liaison descendante indiquant la qualité de canal de liaison descendante entrer le terminal de communication et la station de base respective,
chaque station de base de ladite pluralité de stations de base excepté la station de base transmettant le message de rétroaction au terminal de communication, transmet ladite information de qualité de canal de liaison descendante déterminée à ladite station de base transmettant ledit message de rétroaction,
ladite une station de base transmettant ledit message de rétroaction reçoit l'information de qualité de canal de liaison descendante transmise à partir des autres stations de base de ladite pluralité de stations de base, et évalue l'information de qualité de canal de liaison descendante reçue à partir desdites autres stations de base et l'information de qualité de canal de liaison descendante déterminée par elle-même pour déterminer la meilleure caractéristique de qualité de canal de liaison descendante.

11. Procédé selon l'une des revendications 7 à 10, **caractérisé en ce que** l'évaluation de l'information de qualité de canal de liaison descendante comprend l'étape d'établissement de moyenne de paramètres dans l'information de qualité de canal de liaison descendante, où la sélection est basée sur la qualité de canal de liaison descendante établie sous forme de moyenne.

12. Procédé selon l'une des revendications 1 à 11, **caractérisé par** le fait de comprendre par ailleurs l'étape de :
acheminer le paquet de données de liaison montante à une unité de contrôle dans le système de communication mobile par au moins une des stations de base qui a accusé réception de l'intégrité de données du paquet de données de liaison montante.

13. Procédé selon l'une des revendications 1 à 12, **caractérisé en ce que** le paquet de données de liaison montante est reçu via un canal dédié.

14. Procédé selon l'une des revendications 1 à 13, **caractérisé en ce que** chaque station de base de ladite pluralité de stations de base comprend un moyen pour contrôler et permettre des retransmissions de paquet de données entre la station de base respective et ledit terminal de communication conformément à un schéma de retransmission de paquet.

15. Procédé selon la revendication 14, où le schéma de retransmission est un schéma de retransmission de paquet à base de fenêtre utilisant une fenêtre réceptrice pour contrôler des retransmissions de paquet, et l'information de contrôle échangée parmi les stations de base comprend un pointeur pointant vers le bord supérieur ou bord inférieur de la fenêtre réceptrice.

16. Procédé selon la revendication 14, où le schéma de retransmission est un schéma de retransmission de paquet à arrêt et attente avec au moins un processus de retransmission, et l'information de contrôle échangée parmi les stations de base comprend un numéro de processus identifiant un processus de retransmission de paquet de données, et un indicateur pour indiquer si l'intégrité de paquet de données peut être reconnue.

17. Procédé selon la revendication 16, où l'information de contrôle échangée parmi les stations de base comprend par ailleurs un numéro de séquence ou indicateur de données identifiant le paquet de données de liaison montante à la station de base de réception.

18. Procédé selon l'une des revendications 14 à 17, où l'information de contrôle échangée parmi les stations de base comprend un identificateur identifiant le terminal de communication.

19. Station de base dans un système de communication mobile comprenant un terminal de communication et une pluralité de stations de base incluant ladite station de base, où le terminal de communication est en communication avec ladite pluralité de stations de base pendant un transfert souple, et où ladite station de base comprend :
un moyen de réception pour recevoir un paquet de données de liaison montante à partir du terminal de communication, où le paquet de données de liaison montante est par ailleurs reçu par au moins une autre station de base de ladite pluralité de stations de base,
un moyen pour vérifier l'intégrité de données du paquet de données de liaison montante, et
un tampon souple pour stocker le paquet de données de liaison montante, si l'intégrité de données du paquet de données de liaison montante n'a pas été reconnue par une station de base
**caractérisé en ce que**
le moyen de réception est adapté pour recevoir de l'information de contrôle à partir de au moins une autre station de base de ladite pluralité de stations de base, où l'information de contrôle indique si l'intégrité de données du paquet de données de liaison montante est reconnue par la au moins une autre station de base, et
la station de base est adaptée pour vider le tampon souple en réponse à ladite information de contrôle reçue de ladite au moins une autre station de base.
